## Europäisches Patentamt
## European Patent Office
## Office européen des brevets

(11) Publication number: **0 187 415**
**B1**

(12) **EUROPEAN PATENT SPECIFICATION**

(45) Date of publication of patent specification: **05.10.88**

(51) Int. Cl.⁴: **A 23 G 1/02**, A 23 G 1/00

(21) Application number: **85202034.6**

(22) Date of filing: **10.12.85**

(54) Cocoa powder.

(30) Priority: **10.12.84 NL 8403748**

(43) Date of publication of application:
**16.07.86 Bulletin 86/29**

(45) Publication of the grant of the patent:
**05.10.88 Bulletin 88/40**

(84) Designated Contracting States:
**AT BE CH DE FR GB IT LI LU NL SE**

(56) References cited:
**EP-A-0 066 304**
**FR-A-1 100 109**
**US-A-2 835 592**
**US-A-3 056 677**

**A. FINCKE: "Handbuch der Kakaoerzeugnisse",
2nd Edition, 1965, Springer-Verlag, Berlin (DE);
pp. 296-308**

**The file contains technical information
submitted after the application was filed and
not included in this specification**

(73) Proprietor: **Cacao De Zaan B.V.
Stationsstraat 76
NL-1541 LJ Koog a/d Zaan (NL)**

(72) Inventor: **Kattenberg, Hans Robert
Zwanenbloemlaan 6
NL-1562 SC Krommenie Zaanstad (NL)**

(74) Representative: **van der Saag, Johannes et al
OCTROOIBUREAU VRIESENDORP & GAADE
P.O. Box 266
NL-2501 AW The Hague (NL)**

Courier Press, Leamington Spa, England.

## 0 187 415

**Description**

The invention relates to improved cocoa, particularly to cocoa suitable for the manufacture of milk-based beverages and milk-based desserts, such as stabilized and sterilized chocolate flavoured milk, jellied chocolate flavoured desserts and chocolate flavoured ice-cream. Cocoa or cocoa powder is obtained by grinding roasted, cleaned and deshelled cocoa beans to a paste, called cocoa mass or chocolate liquor, followed by extraction of part of the fat by pressing and finally milling the press cake. More often than not cocoa beans, or one of the intermediate products mentioned above, are processed as well, for example treated with a solution of a hydroxide or carbonate of sodium or potassium, with the object of obtaining a product with a less astringent and richer taste and a deeper and therefore more attractive colour.

Natural process cocoa powder (which is a current expression for cocoa powder that is not processed with alkali) is characterized by a pronouncedly tart and astringent taste and a light colour, best described as tan to light-brown.

Slightly processed cocoa powders have a less tart and less astringent taste and show a light-brown to red-brown colour.

Medium processed cocoa powders combine a rich and strong cocoa flavour with an intense red-brown to red colour.

It is also possible to manufacture intensely processed cocoa powders with a very intense red-brown to deep red colour. The expressions "slightly processed" and "intensely processed" respectively as used here refer to the cocoa powder type, as assessed by the intensity of its colour.

The characterization of cocoa powder colours as mentioned above is highly subjective. For an objective characterization, the colour can be specified by colour coordinates. A system frequently used, and also in the present application, has been developed by R. S. Hunter. In this system three colour coordinates are determined in a standardized way, viz. a coordinate 'L' indicating the colour brightness on a scale from black (L=0) to white (L=100), a coordinate 'a' indicating the redness and a coordinate 'b' indicating the yellowness. In particular, the coordinate 'L' is characteristic for the degree of processing of cocoa powders. As an example, for the various types of cocoa powder the following limits for the L-coordinate are found, if a suspension of the cocoa powder jellified with agar is measured with a Hunterlab Digital Color Difference meter, type D25D2A.

| Cocoa powder type | Limits for L |
| --- | --- |
| Natural process | more than 20 |
| Slightly processed | 18.0—20.0 |
| Medium processed | 16.0—18.0 |
| Intensely processed | less than 16 |

The method for performing the above measurements is as follows: Weigh 1.2 g of the cocoa powder into a 100 ml beaker and add 5 ml of water at 60°C. Stir until a homogeneous paste is obtained. Add 45 g of a freshly prepared 2.5% agar solution, kept at 50°C and mix rapidly until the mixture is homogeneous.

Then pour the agar suspension as quickly as possible into a Petri dish which is lying exactly level and allow to cool for 15 minutes. Remove the agar slab thus obtained from the Petri dish by means of a broad spatula and place it on a white tile. Bring the tile with the slab into the calibrated Hunterlab Digital Color Difference Meter and press the agar slab lightly against the measuring orifice, without protrusion of the surface in the apparatus. Read the L-, a- and b-values.

For numerous industrial applications the use of intensely coloured cocoa powders, e.g., the types which have been described as intensely processed, with an L-coordinate of 16 at the maximum, has proved to be very advantageous. Due to their rich taste and high colouring capacity these types are economical; they also enable the manufacture of finished products with an attractive deep chocolate colour.

A specific intensely processed cocoa powder of this type has been described in EP 82 200147 (published under number 0066304), said cocoa powder combines an intense colour (L-value less than 16) with a pH of 7.5 or less and a ratio pH: alkalinity of the ash below 0.046 while not more or other acid radicals are present than those by nature present in fermented cocoa; this cocoa powder does not show the normal disadvantages of the usual intensely processed cocoa powders which are treated with large amounts of alkali, such as the worse alkaline or salty taste and flavour and is very suitable for use in all kinds of cocoa containing products for which an intense colour is desirable. However, if one uses all of these types for the industrial preparation of dairy products, such as stabilized and sterilized chocolate flavoured milk or chocolate desserts, specific drawbacks are met.

The main ingredients for chocolate flavoured milk are milk (which is here understood to include partly or wholly skimmed milk), sugar and cocoa. Only part of the cocoa dissolves in the liquid. The remaining solid particles have a density which is considerably greater than that of the liquid, resulting, if no special measures are taken, in rapid settling of the cocoa particles.

As consumers prefer a homogeneous beverage, manufacturers add a stabilizing agent, viz. a small quantity of a vegetable hydrocolloid, normally carrageenan. In order to obtain a long shelf life, the mixture is sterilized and then bottled. After filling and closing, the bottles and their contents are sterilized again. It is also possible to fill paperboard or plastic containers aseptically with the sterilized chocolate flavoured milk.

2

In practice thus manufactured chocolate flavoured milk can exhibit visual quality defects, often described as "physical curdling" or "marbling". These phenomena are particularly disadvantageous as they often appear only after a few days and because the consumer associates them wrongly with bacteriological deterioration. From this it follows that the chocolate flavoured milk becomes unsalable only after its delivery to the retailers. Even in non-transparent packaging the above-mentioned quality defects are undesirable as they are attended with concentration variations of the cocoa component, resulting in irregularities as to colour and taste of the chocolate flavoured milk when served.

The above-mentioned visual quality defects may result from the composition or the properties of the milk used and/or the nature of the stabilizer, be it or not in relationship with processing conditions. It is well known that also the type of the cocoa used can be responsible for the occurrence of visual quality defects. In particular the intensely processed types of cocoa powder described above can cause marbling or curdling phenomena.

In this case the chance of this occurring is so great that these types of cocoa powder are not recommended for the manufacture of stabilized and sterilized chocolate flavoured milk, in spite of their attractive organoleptic properties. It has been tried to find a criterium for the suitability of cocoa powders for dairy applications. Dr. G. Andersen (Milchwissenschaft 18, (1963), 161—3; Deutsche Milchwirtschaft, Hildesheim, 22/1971/ 1000-5) attaches much value to the tannin content of cocoa powder. According to him this should not be too high. In order to check the accuracy of this statement the tannin content of a number of samples of cocoa powder was determined with the aid of hide powder (a dried defatted animal hide used to determine tannins content), by means of the so-called filter method. This method has been officially accepted by the "Kommission für Chemische Lederanalyse" of the German "Verein für Gerbereichemie und -Technik" (Working Party on the chemical analysis of leather of the German Association for tanning chemistry and technology). Starting from the same samples stabilized and sterilized chocolate flavoured milk was prepared, according to usual recipes and methods. Preliminary tests had shown the milk and stabilizer used as well as the processing conditions to be optimum for a product not showing visual defects. The results are summarized in the following table:

TABLE

| Test No. | Cocoa powder type | Tannic acid content (%, on dry material) | Result |
|---|---|---|---|
| I. | Natural processed | 8.7 | Slight curdling |
| II. | Slight processed | 13.0 | Nearly homogeneous, small light collar |
| III. | Medium processed | 12.0 | Heavy curdling |
| IV.a. | Intensely processed (1) | 12.7 | Heavy curdling |
| IV.b. | Intensely processed (2) | 12.7 | Heavy curdling |

(1) Intensely processed cocoa obtained on the market.
(2) Intensely processed cocoa according to EP 82 200147.

From these laboratory experiments it becomes evident that the tannin content of the cocoa powder is an incorrect criterium for the suitability of cocoa powder from the point of view of the occurrence of visual defects in chocolate flavoured milk. The natural process cocoa is unsuitable for colour and flavour reasons, but also because it increases the tendency of milk proteins to coagulate under the influence of sterilization, due to its pH-reducing properties.

In chocolate flavoured desserts of the blancmange type the firmness and spoonability are important quality characteristics. As a yardstick for these properties serves the gel strength as measured with a Stevens LFRA Analyzer with a standard plunger mounted. Blancmange of good quality has a gel strength of at least 36 g (plunger speed 1 mm.sec(-1) and plunger displacement 10 mm). However, medium and intensely processed cocoa types, which colour- and tastewise would be advantageous to the dairy products in question, affect the above quality characteristics, as is demonstrated by the following tests. Chocolate blancmange was prepared using the various types of cocoa powder and according to the following recipe:

| | |
|---|---|
| Milk, standardized at a fat content of 3.5% | 1 l |
| Sugar | 90 g |
| Corn starch | 18 g |
| Carrageenan (Genulacta P-100, Hercules) | 2 g |

3

Sugar, corn starch, cocoa powder and carrageenan were carefully mixed and added to the milk. The mixture was heated to 90°C while stirring and was kept at this temperature for 15 minutes. Then it was cooled to 40°C under continued stirring and poured into bowl-shaped cups measuring 300 ml, having an upper diameter of 11.5 cm and a flat bottom with diameter 5.5 cm. The height of the blancmange layer in the cups was 4.0 cm. After keeping them at 5°C during a night the jellified blancmange desserts were turned on a level plate and the gel-strength, being a measure for the visco-elastic properties, was immediately measured by means of the Stevens LFRA Analyzer with the standard plunger mounted. The results were as follows:

| Test No. | Cocoa powder type | Gel strength of the blancmange (in g, plungerspeed 1 mm.sec(-1), displacement 10 mm) |
|---|---|---|
| V. | Natural processed | 40.6 |
| VI. | Slightly processed | 38.7 |
| VII. | Medium processed | 33.2 |
| VIII. | Intensely processed | 31.2 |

By these tests it is demonstrated that it is not possible to obtain the preferred dark chocolate colour of the blancmange by using the known medium to intensely processed cocoa types without imparing the gel strength.

It is an objective of the invention to provide cocoa which, although in colour corresponding with intensely processed types of cocoa powder does not—contrary to the known cocoa powders of this type—give rise to visual defects in chocolate flavoured milk prepared with it or only to a considerably less degree, and/or does not or hardly cause a decrease in gel strength of chocolate desserts of the blancmange type equally prepared with the cocoa of the invention.

Surprisingly it has been discovered that cocoa powders, corresponding in colour with the intensely processed types do not, or to a considerably less degree give rise to curdling phenomena in stabilized and sterilized chocolate flavoured milk and do not, or hardly cause a decrease in gel strength in blancmange type desserts, provided their simple polyhydroxy-phenols content, as determined according to the method described hereafter, is at least 0.25%. Consequently the present invention relates to improved cocoa having a colour coordinate L of 16 or less and a simple polyhydroxyphenols content of at least 0.25%. The simple polyhydroxyphenols content of cocoa is determined by means of high pressure liquid chromatography (HPLC) of an acetone/water (3:1 v/v) extract of chloroform-defatted cocoa powder, gallic acid serving as an internal standard. The method is described in: F, Villeneuve, Etude des polyphénols du cacao au cours de la fermentation, Thèse de 3ième cycle, Unversité des Sciences techniques du Languedoc, Montpellier, France, 1982. (F. Villeneuve, Study on cocoa polyphenols during fermentation, 3rd cycle thesis, Technical University of the Languedoc, Montpellier, France 1982).

A. Fincke et al in "Handbuch der Kakaoerzeugnisse" Springer Verlag, Berlin 1965, pages 297—309, describe a number of monomeric and polymeric polyhydroxyphenols which have been found in unfermented and fermented cocoa beans. Nothing is said however about the contents of these compounds in processed cocoa powders. Preferably the improved cocoa of the invention has a simple polyhydroxy-phenols content of at least 0.30%, as this results in a chocolate flavoured milk with the least tendency to curdle and/or a chocolate blancmange with optimum firmness.

The invention also relates to foodstuffs containing the cocoa of the invention, particularly semi-finished products for the manufacture of dairy products, more specifically stabilized and sterilized chocolate flavoured milk and chocolate flavoured desserts of the blancmange type. The invention is further illustrated with the help of the following examples, to which the invention is not limited, however.

Example I

Chocolate flavoured milk was prepared according to the following recipe:

| | |
|---|---|
| Skim milk (prepared by dissolving 95 g skim milk powder per litre of water) | 10 l |
| Sugar | 600 g |
| Cocoa powder "A" | 150 g |
| Stabilizer (Carrageenan, Genulacta K-100, Hercules) | 2 g |

Cocoa powder "A" was a cocoa powder according to the invention, with fat content 10.9%, moisture content 4.3%, pH 7.6 (measured in 10% suspension in boiling water, cooled down to ambient temperature), L-value 14.7 and simple polyhydroxyphenols content 0.31%. The cocoa powder, sugar and stabilizing agent were carefully mixed and added to the milk. The mixture was heated to 75°C while stirring and homogenized at this temperature and a pressure of 167 bar using a Rannie homogenizer.

After bottling, the bottles were closed with a crown cap and sterilized in a Stock Rotorzwerg sterilizing autoclave at a temperature of the heating medium of 120°C (pressure 1.5 bar) during 15 minutes. After cooling down to 20°C the chocolate flavoured milk in the bottles was examined on its visual aspects and kept at room temperature. After three and ten days' standing the appearance was examined again.

The chocolate flavoured milk did not show any marbling or curdling. In comparison a test was performed according to the following example:

Example II

Chocolate flavoured milk was prepared exactly according to the recipe and method described in Example I, however, with cocoa powder "B" having the following analysis: fat content 10.7%, moisture content 4.5%, pH, measured as described in Example I, 7.9, L-coordinate 15.0, simple polyhydroxyphenols content 0.22%. The chocolate flavoured milk, prepared with cocoa powder "B" showed a pronounced curdling immediately after sterilization and cooling to 20°C. On shaking the bottles this curdling disappeared for a short time only and after three and ten days' standing, marbling to a heavy degree was visible. The liquid was divided into a light-coloured upper layer with slight curdling and a dark-coloured heavily marbled bottom layer.

After these tests, it was checked whether the pH difference, existing between the cocoa powder "A" and "B", could possibly influence the appearance of the chocolate flavoured milk, as described in the Examples I and II. To this end, potassium carbonate was added to cocoa powder "A" until a pH of 7.9 (being the pH of "B") was obtained, if measured according to the method described in Example I, and citric acid was added to cocoa powder "B" to obtain a pH of 7.6 (the pH of "A"). The so obtained cocoa powders, designated as "A-7.9" and "B-7.6" respectively, served to prepare chocolate flavoured milk according to the recipe and method as described in Example I. The results as regards the appearance of the chocolate flavoured milk, when examined after standing three and ten days were as follows:

| Example | Cocoa powder used | Appearance chocolate flavoured milk |
|---------|-------------------|-------------------------------------|
| III | "A-7.9" | Homogeneous, without marbling or curdling |
| IV | "B-7.6" | Heavy marbling, light and dark layers |

The effect of the use of a cocoa powder of the invention on the gel strength of chocolate blancmange made with it becomes evident from the following examples:

Example V

Chocolate blancmange was prepared according to the following recipe:

| | |
|---|---|
| Milk, standardized at a fat content of 3.5% | 1 l |
| Sugar | 90 g |
| Corn starch | 65 g |
| Cocoa powder "A" | 18 g |
| Carrageenan (Genulacta P-100, Hercules) | 2 g |

Sugar, corn starch, cocoa powder and carrageenan were carefully mixed and added to the milk. The mixture was heated to 90°C while stirring and kept at this temperature for 15 minutes, then cooled to 40°C under continued stirring and poured into bowl-shaped cups measuring 300 ml, having an upper diameter of 11.5 cm and a flat bottom with diameter 5.5 cm. The height of the blancmange layer in the cups was 4.0 cm. After keeping them at 5°C during the night the jellified blancmange desserts were turned on a level plate and the gel strength was immediately measured. This amounted to 37.9 g. Cocoa powder "A" was from the same sample as used in Example I.

Example VI

In comparison also a chocolate blancmange was prepared with cocoa powder "B", corresponding to the cocoa powder that was used in Example II, in the same way and following the same recipe as in Example V. The gel strength of this blancmange amounted to 31.7 g, when measured under the same conditions as in Example V.

The cocoa of the invention can be obtained by submitting cocoa beans or broken and deshelled cocoa beans (cocoa nibs) to processing, which on the one hand results in a cocoa of the intense colour as described; on the other hand it is effectuated in such a way as to preserve the simple polyhydroxyphenols content at the desired level. To this end it is preferred to treat whole deshelled cocoa beans or a coarse fraction of cocoa nibs with a hot concentrated alkaline processing liquid under such conditions that the processing liquid does not penetrate completely into the beans or nibs. Preferably the conditions are so adjusted that about 75 to 125 ml of processing liquid of an alkali content equivalent to 24% by weight of potassium carbonate are absorbed per kg of deshelled cocoa beans or nibs. If a processing liquid of a different concentration is used the limits are to be adapted accordingly. After they have been subjected to the processing liquid, the beans or nibs are dried, preferably about 4—15 minutes after they were subjected to the processing liquid. The processing liquid can be a solution of usual alkalis, like NaOH, KOH, $Na_2CO_3$, $K_2CO_3$. Preferably the processing liquid has a concentration equivalent to at least 20% by weight $K_2CO_3$.

The following example illustrates a suitable process for the manufacture of the cocoa of the invention. The methods to obtain the cocoa of the invention are by no means limited to this example, however.

Example VII

Deshelled and broken cocoa kernels which did not pass a sieve with a size of mesh of 4 mm were sprayed on a stainless steel conveyor belt with a hot concentrated processing liquid consisting of 24% by weight potassium carbonate solution. The conveyor speed was adjusted at 0.5 m.min(-1) and the volume of processing liquid which was sprayed per unity of time was adjusted at 50 ml.min(-1), resulting in the absorption of 100 ml processing liquid per kg deshelled and broken cocoa kernels. At a three meters' distance from the moistening zone the cocoa kernels were dried by means of infrared radiation (interval between moistening and drying 6 minutes). The processed and dried cocoa kernels were roasted in a laboratory oven at 130°C for 30 minutes ground coarsely by means of an Alpine disc and pin mill and then in a Wiener ball mill. Part of the fat of the cocoa mass obtained was extracted by means of a hydraulic laboratory press (type L-30, Research and Industrial Instruments Company, England) and the resulting cocoa cake was pulverized in a Retsch Laboratory centrifugal mill.

The resulting cocoa powder had a fat content of 13.7%, a moisture content of 3.9%, a pH (when measured in 10% water suspension) of 7.8 and a simple polyhydroxyphenols content of 0.30%. The L-value, when measured in an agar-jellified suspension, amounted to 15.2. The cocoa powder was used to prepare chocolate flavoured milk as described in Example I. The sterilized finished product did not present any curdling phenomena. A chocolate blancmange, which was prepared with this cocoa powder according to the recipe of Example V had a gel strength of 38.1 g.

The result of the process described here can be modified; as a matter of fact the interval between moistening with the processing liquid and drying determines the colour on the one hand and the simple polyhydroxyphenols content of the cocoa on the other. Hence it may be necessary, depending on the properties of the cocoa beans used, the capacity of the infrared radiators, the concentration of the processing liquid, etc., to adjust the time interval between moistening and drying. The optimum can be found in a simple way by measuring the colour coordinates of the resulting cocoa powder and determining its simple polyhydroxyphenols content as indicated above.

**Claims**

1. Improved cocoa with colour coordinate L:16 or below and a simple polyhydroxyphenols content of at least 0.25%.

2. Improved cocoa according to claim 1, characterized in that the simple polyhydroxyphenols content is at least 0.30%.

3. Method for the preparation of an improved cocoa with colour coordinate L:16 or below, characterized in that a cocoa is prepared which further has a simple polyhydroxyphenols content of at least 0.25%, by treating whole deshelled cocoa beans or a coarse fraction of cocoa nibs with a hot concentrated alkaline processing liquid under such conditions that the processing liquid does not penetrate completely into the beans or nibs.

4. Method according to claim 3 characterized in that an amount of processing liquid corresponding in effect to about 75—125 ml of processing liquid of an alkali content equivalent to 24% by weight of potassium carbonate, is absorbed per kg of deshelled cocoa beans or nibs.

5. Method according to claim 3 or 4 characterized in that the beans or nibs are dried about 4—15 minutes after they were subjected to the processing liquid.

6. Method according to one of claims 3—5 characterized in that the processing liquid has a concentration equivalent to at least 20% by weight, $K_2CO_3$.

7. Foodstuffs and semi-finished products containing improved cocoa according to claim 1 or 2 or prepared by the method of claims 3—6.

8. Process for preparing foodstuffs and semi-finished products, containing cocoa by mixing cocoa powder with usual components for said foodstuffs and semi-finished products, characterized in that an improved cocoa obtained according to one or more of the preceding claims is used.

**Patentansprüche**

1. Verbesserter Kakao mit einem Farbkoordinaten-L-Wert von 16 oder weniger und einem Gehalt an einfachen Polyhydroxyphenolen von wenigstens 0,25%.

2. Verbesserter Kakao nach Anspruch 1, dadurch gekennzeichnet, daß der Gehalt an einfachen Polyhydroxyphenolen wenigstens 0,30% beträgt.

3. Verfahren zur Herstellung eines verbesserten Kakaos mit einem Farbkoordinaten-L-Wert von 16 oder weniger, dadurch gekennzeichnet, daß ein Kakao, der weiterhin einen Gehalt an einfachen Polyhydroxyphenolen von wenigstens 0,25% hat, durch Behandlung ganzer geschälter Kakaobohnen oder einer groben Fraktion von Kakaosplittern mit einer heißen konzentrierten alkalischen Behandlungsflüssigkeit unter solchen Bedingungen, daß die Behandlungsflüssigkeit nicht vollständig in die Bohnen oder Splitter eindringt, hergestellt wird.

4. Verfahren nach Anspruch 3, dadurch gekennzeichnet, daß eine Menge Behandlungsflüssigkeit, die in der Wirkung etwa 75 bis 125 ml Behandlungsflüssigkeit mit einem Alkaligehältäquivalent von 24 Gew.-% Kaliumcarbonat entspricht, pro kg der geschälten Kakaobohnen oder -splitter absorbiert wird.

5. Verfahren nach Anspruch 3 oder 4, dadurch gekennzeichnet, daß die Bohnen oder Splitter 4 bis 15 min, nachdem sie der Behandlungsflüssigkeit unterworfen wurden, getrocknet werden.

6. Verfahren nach einem der Ansprüche 3 bis 5, dadurch gekennzeichnet, daß die Behandlungsflüssigkeit eine Konzentration aufweist, die wenigstens 20 Gew.-% $K_2CO_3$ entspricht.

7. Nahrungsmittel und Halbfertigprodukte, die den verbesserten Kakao nach Anspruch 1 oder 2 enthalten oder nach dem Verfahren der Ansprüche 3 bis 6 hergestellt sind.

8. Verfahren zur Herstellung kakaohaltiger Nahrungsmittel und Halbfertigprodukte durch Mischen von Kakaopulver mit üblichen Bestandteilen dieser Nahrungsmittel und Halbfertigprodukte, dadurch gekennzeichnet, daß ein nach einem oder mehreren der vorstehenden Ansprüche erhaltener verbesserter Kakao verwandt wird.

**Revendications**

1. Cacao amélioré avec une coordonnée de couleur L de 16 ou moins et un contenu en polyhydroxyphénols simples d'au moins 0,25%.

2. Cacao amélioré selon la revendication 1, caractérisé en ce que la teneur en polyhydroxyphénols simples est au moins 0,30%.

3. Procédé pour la préparation d'un cacao amélioré avec une coordonnée de couleur L de 16 ou moins, caractérisé en ce qu'un cacao est préparé qui présente en outre une teneur en polyhydroxyphénols simples d'au moins 0,25%, par traitement de l'ensemble et des fèves décortiquées du cacao ou une fraction grossière des graines décortiquées de cacao avec un liquide alcalin concentré chaud de traitement dans des conditions telles que le liquide de traitement ne pénètre pas complètement dans les fèves ou les graines décortiquées.

4. Procédé selon la revendication 3, caractérisé en ce qu'une certaine quantité du liquide de traitement correspondant de fait à environ 75—125 ml du liquide de traitement d'une teneur en alcali équivalente à 24% en poids de carbonate de potassium, est absorbée par kg des fèves ou des graines décortiquées de cacao.

5. Procédé selon la revendication 3 ou la revendication 4, caractérisé en ce que les fèves ou les graines sont séchées pendant environ 4—15 minutes après avoir été soumises au liquide de traitement.

6. Procédé selon l'une quelconque des revendications 3 à 5, caractérisé en ce que le liquide de traitement a une concentration équivalent à au moins 20% en poids, $K_2CO_3$.

7. Aliments et produits semi-finis contenant du cacao amélioré selon la revendication 1 ou la revendication 2, ou préparés par le procédé des revendications 3 à 6.

8. Procédé pour préparer des aliments et des produits semi-finis contenant du cacao en mélangeant de la poudre de cacao avec des composants usuels pour lesdits aliments et produits semi-finis, caractérisé en ce qu'on utilise un cacao amélioré obtenu conformément à l'une ou à plusieurs des revendications précédentes.